# DEMANDE DE BREVET EUROPEEN

(11) **EP 1 925 792 A1**
(43) Date de publication de la demande: **28.05.2008**
(21) Numéro de dépôt: 07301511.7
(22) Date de dépôt: 30.10.2007
(51) Int. Cl.: F01N 7/08, F01N 7/18

(54) **Elément de raccord dans un circuit d'échappement de moteur**

(30) Priorité: 22.11.2006 FR 0655038
(71) Demandeur: RENAULT S.A.S., 92100 Boulogne Billancourt (FR)
(72) Inventeur: Charlon, Stephane, 92500, Rueil Malmaison (FR); Meyniel, David, 75018, Paris (FR)

(57) **Abrégé**

L'invention concerne un élément de raccord coudé (30) d'un circuit d'échappement d'un moteur à combustion interne (10), raccordant un élément mécanique (20) du circuit d'échappement, à la ligne d'échappement (22), et comportant un conduit coudé (46), une bride d'entrée (32) s'étendant autour de l'orifice d'entrée (34) du conduit (46), et une bride de sortie (38) s'étendant autour de l'orifice de sortie (40) du conduit (46). Selon l'invention, l'élément de raccord coudé (30) possède des moyens (48, 50) permettant de fixer le raccord (30) sur une partie fixe (14) du moteur (10).

## Description

La présente invention concerne l'échappement de moteurs à combustion interne de véhicules automobiles.

Plus particulièrement, l'invention concerne un élément de raccord coudé destiné à raccorder la sortie d'un organe mécanique tel qu'un turbocompresseur fixé avec un support sur le moteur, à l'entrée de la ligne d'échappement qui se prolonge dans un tunnel aménagé sous la caisse du véhicule. Cette ligne d'échappement dirige les gaz vers la sortie d'échappement à l'arrière du véhicule, et peut contenir différents éléments comme des silencieux ou des organes de dépollution.

Les raccords actuels sont de simples conduits coudés réalisés par cintrage d'un tube, et comprenant à chaque extrémité une bride de fixation. Ce mode de réalisation par cintrage impose un angle minimal du coude, nécessitant ainsi une longueur importante du conduit coudé afin d'obtenir l'angle désiré. Les moteurs étant de plus en plus compacts, il est difficile d'aménager à la fois le support de l'organe mécanique et l'élément de raccord coudé, tout en obtenant une angle idéal du coude afin de raccorder la ligne d'échappement en direction du tunnel du véhicule.

De plus, la ligne d'échappement possède un certain degré de liberté sous la caisse du véhicule. Les mouvements de la ligne lors du fonctionnement du véhicule, se transmettent directement à la sortie de l'organe mécanique fixé au moteur et relié à la ligne d'échappement par l'élément de raccord coudé. Les efforts ainsi transmis provoquent des contraintes sur cet organe mécanique.

Le but de l'invention, est de proposer un élément de raccord coudé améliorant la compacité du moteur et limitant la remontée des efforts de la ligne d'échappement vers les organes mécaniques du moteur.

Dans ce but, l'invention propose un élément de raccord coudé qui possède des moyens de fixation sur une partie fixe du moteur.

Selon d'autres caractéristiques de l'invention, l'élément de raccord coudé peut posséder une plaque solidarisant les brides d'entrée et de sortie de l'élément de raccord, ladite plaque s'étendant selon un plan sensiblement perpendiculaire aux plans définis par les brides d'entrée et de sortie de l'élément de raccord coudé.

L'axe principal du conduit coudé peut être compris dans le plan formé par la plaque solidarisant les brides d'entrée et de sortie de l'élément de raccord coudé.

Les moyens permettant de fixer le raccord sur une partie fixe du moteur peuvent être des alésages réalisés dans un rebord s'étendant de part et d'autre de la plaque.

Le rebord peut être situé du coté de la plaque en regard du moteur.

L'élément de raccord coudé peut raccorder un turbocompresseur à la ligne d'échappement.

L'élément de raccord coudé peut être fixé sur le carter cylindre du moteur.

L'invention sera désormais décrite dans un exemple en référence aux dessins annexés suivants :
- la figure 1 est un schéma en perspective d'un véhicule comportant un circuit d'échappement du moteur du véhicule comprenant l'élément de raccord coudé de l'invention;
- la figure 2 est un schéma du véhicule de la figure 1 vu de dessus ; et
- la figure 3 est un schéma en perspective de l'élément de raccord coudé de l'invention

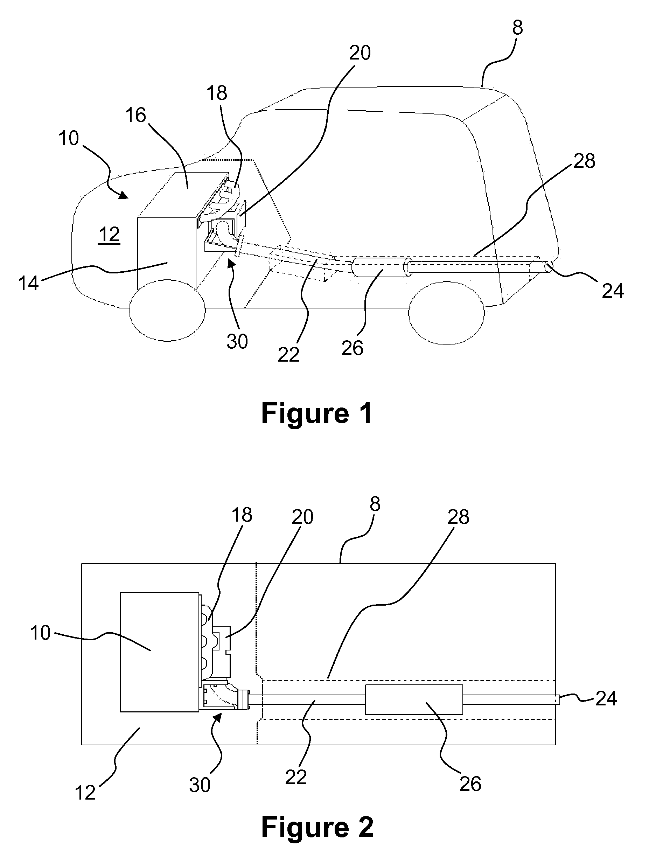

En référence aux figures 1 à 3, un véhicule automobile 8 comprend un moteur à combustion interne 10 dans un compartiment moteur 12 situé à l'avant du véhicule 8. Le moteur 10 est positionné transversalement par rapport à la longueur du véhicule 8.

Le moteur 10 est composé d'un carter cylindres 14, d'une culasse 16, et de différents organes mécaniques. La culasse 16 comprend des orifices d'échappement des gaz après leur combustion dans le moteur. Ces orifices d'échappement des gaz sont situés sur la face de la culasse 16 en regard de l'arrière du véhicule 8.

Parmi les organes mécaniques du moteur à combustion interne 10, on trouve un collecteur d'échappement 18, fixé sur la face de la culasse 16 comportant les orifices d'échappement des gaz. Le collecteur d'échappement 18 possède des tubulures recueillant les gaz d'échappement aux différents orifices d'échappement de la culasse 16 et dirigeant ces gaz vers un unique orifice de sortie du collecteur 18. Une bride de sortie s'étend autour de l'orifice de sortie du collecteur 18.

Parmi les organes mécaniques on trouve aussi un turbocompresseur 20 comportant un orifice d'entrée et un orifice de sortie des gaz d'échappement. Le turbocompresseur 20 comporte aussi une bride d'entrée s'étendant autour de l'orifice d'entrée et une bride de sortie s'étendant autour de l'orifice de sortie du turbocompresseur 20. La bride d'entrée du turbocompresseur 20 est fixée contre la bride de sortie du collecteur d'échappement 18. Dans cet exemple, la bride de sortie du collecteur est située sur la partie inférieure du collecteur 18, le turbocompresseur est dit « suspendu ». La bride de sortie du turbocompresseur 20 se situe dans un plan vertical sensiblement perpendiculaire par rapport au plan comprenant la face du carter cylindre du côté de laquelle le turbocompresseur 20 est monté.

Le véhicule 8 comporte une ligne d'échappement 22 s'étendant du compartiment moteur 12 jusqu'à l'arrière du véhicule 8. La ligne 22 dirige les gaz d'échappement du turbocompresseur 20 à la sortie d'échappement 24. La ligne d'échappement 22 est composée d'un conduit tubulaire comportant une bride de fixation s'étendant autour de l'orifice d'entrée du conduit. La ligne 22 comporte aussi différents éléments comme des silencieux ou des organes de dépollution 26.

La ligne d'échappement 22 est positionnée dans un tunnel 28 de passage de câbles et de canalisations. Le tunnel 28 est une rainure aménagée longitudinalement dans le plancher du véhicule 8. Le profil de la rainure est sensiblement trapézoïdal. L'entrée du tunnel 28 est située au niveau de la partie arrière du compartiment moteur 12.

Le turbocompresseur 20 est relié à la ligne d'échappement 22 par un élément de raccord coudé 30.

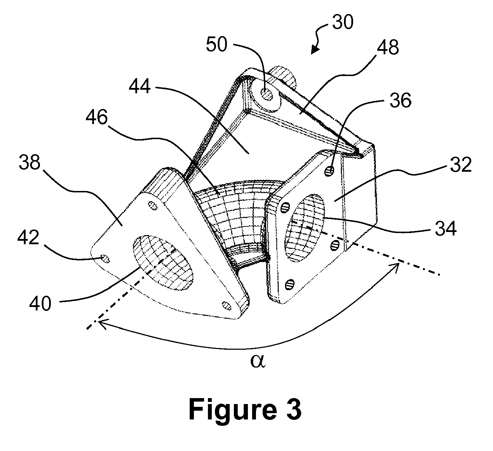

L'élément de raccord coudé 30 représenté seul sur la figure 3, comporte une plaque 32 sensiblement rectangulaire s'étendant autour d'un orifice d'entrée 34 et comportant des alésages 36 à chacun des ses coins. Cette plaque forme ainsi une bride d'entrée 32 de l'élément de raccord coudé 30 qui est fixée à la bride de sortie du turbocompresseur 20 avec des vis.

L'élément de raccord coudé 30 comporte aussi une plaque 38 sensiblement triangulaire s'étendant autour d'un orifice de sortie 40 et comportant des alésages 42 à chacun des ses coins. Cette plaque 38 forme ainsi une bride de sortie 38 de l'élément de raccord coudé 30 qui est fixée à la bride de fixation de la ligne d'échappement 22.

La droite normale au plan formé par la bride de sortie 38 forme un angle α par rapport à la droite normale au plan formé par la bride d'entrée 32 de l'élément de raccord coudé 30, de manière à ce que l'orientation de la ligne d'échappement 22 soit adaptée au positionnement de ladite ligne 22 dans le tunnel 28 du véhicule 8.

La bride de sortie 38 est solidarisée avec la bride d'entrée 32 de l'élément de raccord coudé 30 par l'intermédiaire d'une plaque 44 s'étendant selon un plan sensiblement perpendiculaire aux plans définis par les brides d'entrée 32 et de sortie 38 de l'élément de raccord coudé 30.

L'orifice de sortie 40 est raccordé à l'orifice d'entrée 34 de l'élément de raccord coudé 30 par l'intermédiaire d'un conduit coudé 46 solidaire de la plaque 44 solidarisant les brides d'entrée 32 et de sortie 38 de l'élément coudé 30. L'axe principal du conduit coudé 46 est contenu dans le plan formé par la plaque 44 solidarisant les brides 32 et 38.

La plaque 44 solidarisant les brides d'entrée 32 et de sortie 38 de l'élément coudé 30 comprend, du coté opposé à la bride de sortie 38 c'est-à-dire du coté du carter cylindres 14, un rebord 48 s'étendant de part et d'autre de la plaque 44. Le rebord 48 comprend des alésages 50 permettant la fixation de l'élément de raccord coudé 30 au carter cylindres 14. De cette manière l'élément de raccord coudé 30 sert à la fois de raccord du turbocompresseur 20 à la ligne d'échappement 22, mais aussi de support du turbocompresseur 20.

L'élément de raccord coudé 30 est réalisé en fonderie de manière à obtenir une pièce monobloc. De ce fait, l'angle α désiré pour obtenir l'alignement optimal de la ligne d'échappement 22 dans le tunnel 28, peut être obtenu sans contrainte de réalisation contrairement au mode de réalisation de l'art antérieur par cintrage imposant un angle de cintrage maximum.

Un des avantages de cette invention est d'intégrer le support du turbocompresseur 20 à l'élément de raccord 30, permettant ainsi un gain de pièces et améliorant la compacité. De plus l'élément de raccord 30 limite la remontée de efforts de la ligne d'échappement vers les organes mécaniques du moteur car il est directement fixé sur le carter cylindres 14.

## Revendications

1. Elément de raccord coudé (30) d'un circuit d'échappement d'un moteur à combustion interne (10), raccordant un élément mécanique (20) du circuit d'échappement, à la ligne d'échappement (22), et comportant un conduit coudé (46), une bride d'entrée (32) s'étendant autour de l'orifice d'entrée (34) du conduit (46), et une bride de sortie (38) s'étendant autour de l'orifice de sortie (40) du conduit (46), **caractérisé en ce que** l'élément de raccord coudé (30) possède des moyens (48, 50) de fixation sur une partie fixe (14) du moteur (10).

2. Elément de raccord coudé (30) selon la revendication 1, **caractérisé en ce que** l'élément de raccord coudé (30) possède une plaque (44) solidarisant les brides d'entrée (32) et de sortie (38) de l'élément de raccord (30).

3. Elément de raccord coudé (30) selon la revendication 2, **caractérisé en ce que** la plaque (44) s'étend selon un plan sensiblement perpendiculaire aux plans définis par les brides d'entrée (32) et de sortie (38) de l'élément de raccord coudé (30).

4. Elément de raccord coudé (30) selon une des revendications 2 ou 3, **caractérisé en ce que** l'axe principal du conduit coudé (46) est compris dans le plan formé par la plaque (44).

5. Elément de raccord coudé (30) selon une des revendications 2 à 4, **caractérisé en ce que** les moyens (48, 50) de fixation sont des alésages (50) réalisés dans un rebord (48) s'étendant de part et d'autre de la plaque (44).

6. Elément de raccord coudé (30) selon la revendication 5, **caractérisé en ce que** le rebord (48) est situé du coté de la plaque (44) en regard du moteur (10).

7. Elément de raccord coudé (30) selon une des revendications précédentes, **caractérisé en ce que** l'élément mécanique (20) est un turbocompresseur (20).

8. Elément de raccord coudé (30) selon une des revendications précédentes, **caractérisé en ce que** la partie fixe (14) du moteur (10) sur laquelle il est fixé, est le carter cylindre (14) du moteur (10).
